(19) Europäisches Patentamt

European Patent Office

Office européen des brevets

(11) **EP 0 823 645 B1**

(12) **EUROPÄISCHE PATENTSCHRIFT**

(45) Veröffentlichungstag und Bekanntmachung des Hinweises auf die Patenterteilung:
**04.07.2001  Patentblatt 2001/27**

(51) Int Cl.⁷: **G02B 5/04**, F21S 11/00, E06B 9/24

(21) Anmeldenummer: **97113294.9**

(22) Anmeldetag: **01.08.1997**

(54) **Fensterscheibe**

Window pane

Vitre de fenêtre

(84) Benannte Vertragsstaaten:
**BE ES FR GB IT NL**

(30) Priorität: **08.08.1996  DE 19631933**

(43) Veröffentlichungstag der Anmeldung:
**11.02.1998  Patentblatt 1998/07**

(73) Patentinhaber: **Lorenz, Werner, Dr.**
**45257 Essen (DE)**

(72) Erfinder: **Lorenz, Werner, Dr.**
**45257 Essen (DE)**

(56) Entgegenhaltungen:
EP-A- 0 092 322    DE-C- 163 606
DE-U- 8 520 439    FR-A- 2 463 254
US-A- 2 993 409    US-A- 5 204 777

**Beschreibung**

Die Erfindung betrifft eine Fensterscheibe, mit der im Winter Heizenergie und im Sommer Kühlenergie gespart werden kann. Fenster sollen im allgemeinen Tageslicht in ausreichendem Maße in die Innenräume von Gebäuden hereinlassen und gleichzeitig die Innenraumatmosphäre gegen wechselnde Einflüsse der Außenatmosphäre, wie zum Beispiel jahreszeitlich veränderliche Temperaturen, Lärm-, Abgas- und Staubemissionen, abschirmen. Mit dem Tageslicht, bestehend aus direkter und indirekter, diffuser Sonnenstrahlung, dringt auch Energie durch die Fenster ein, welche zur Erwärmung der Innenräume beiträgt. Im Winter ist dieser Energiebeitrag, sofern Blendwirkung vermieden werden kann oder als nicht störend gilt, im allgemeinen erwünscht, während im Sommer diese Aufheizung der Innenräume im allgemeinen unerwünscht ist.

Bekannte Fensterscheiben sind als Isolierglasscheiben ausgebildet, die die Wärmebilanz und damit das Innenklima des Gebäudes beeinflussen. Sie sind für direktes und diffuses Sonnenlicht weitgehend durchlässig, damit die Innenräume des Gebäudes tagsüber möglichst hell sind. Um die Durchlässigkeit für Sonneneinstrahlung zu reduzieren, ist es bekannt, wenigstens eine Scheibe der Isolierglasscheibe mit einer Reflexionsschicht zu versehen. Dadurch wird aber auch die Helligkeit im Innem des Gebäudes reduziert.

Es ist auch eine Isolierglasscheibe bekannt, die bei guter Durchlässigkeit für diffuse Sonnenstrahlung eine relativ geringe Durchlässigkeit für direkte Sonnenstrahlung im Sommer und eine große Durchlässigkeit für direkte Sonnenstrahlung im Winter besitzt (DE-GM 8520439). Dazu sind zwischen der Außenscheibe und der Innenscheibe der Isolierglasscheibe mehrere im wesentlichen horizontale Schienen mit gegenseitigem Abstand vertikal übereinander angeordnet, die wenigstens auf ihrer Oberseite längs laufende Rillenprofile mit gegen die Außenscheibe geneigten Profilflächen aufweisen, wobei zumindest die gegen die Außenscheibe geneigten Profilflächen verspiegelt sind. Derartige Isolierglasscheiben, die in abgewandelter Form auch aus der Praxis bekannt sind, sind konstruktiv verhältnismäßig aufwendig.

Es ist ferner eine Prismenglasschelbe bekannt, welche bei guter Durchlässigkeit für diffuse Sonnenstrahlung eine Sperrwirkung für direkte Sonnenstrahlung im Sommer und nahezu die Durchlässigkeit einer üblichen Planglasscheibe für direkte Sonnenstrahlung im Winter hat (Französische Patentschrift Nr. 8017364, Publikation Nr. 2463254). Dazu wird eine Scheibe aus transparentem Material mit horizontalen, außenseitigen Prismenstäben von dreieckigem Querschnitt verwendet. Diese Prismenglasscheibe nutzt die an der raumseitigen, glatten Oberfläche ab bestimmten Sonnenhöhenwinkeln auftretende Totalreflexion für eine Sperrwirkung gegenüber direkter Sonnenstrahlung. Es wird eine Gleichung angegeben, in welcher der Grenzwinkel der Sonnenhöhe, der kritische Einfallswinkel eines Strahles auf die raumseitige Oberfläche, für den gerade Totalreflexion auftritt, und der Winkel zwischen der oberen Prismenstaboberfläche und der raumseitigen Oberfläche der Prismenglasscheibe miteinander verknüpft sind. Derartige Prismenglasscheiben haben trotz optimaler Dimensionierung des Prismenstabquerschnittes nur für im wesentlichen südliche Ausrichtungen und nur für einen relativ kurzen sommerlichen Zeitraum, welcher möglicherweise kürzer als gewünscht ist, die beschriebene Sperrwirkung gegenüber direkter Sonnenstrahlung. Diese Beschränkungen sind die wesentliche Ursache dafür, daß diese Prismenglasscheibe kaum praktisch angewendet wird.

Aufgabe der Erfindung ist es, eine Fensterscheibe für vertikale Fenster und Fassaden anzugeben, die auch für wesentlich von Süden abweichende Ausrichtungen und auch für große sommerliche Zeiträume, sofern diese erwünscht sind, eine Sperrwirkung für direkte Sonnenstrahlung aufweist und die in einem winterlichen Zeitraum für direkte Sonnenstrahlung durchlässig ist.

Diese Aufgabe wird gelöst mit einer Fensterscheibe, gemäß Anspruch 1. Die Fensterscheibe weist raumseitig eine ebene vertikale Rückseite und außenseitig eine Vielzahl von übereinander angeordneten, sich horizontal oder unter einem flachen Neigungswinkel erstreckenden Prismenstäben mit dreieckförmigem Querschnitt auf, wobei im Querschnitt der Prismenstäbe gesehen die obere Dreieckseite gegenüber der Vertikalen unter einem Winkel ($\theta$) angeordnet ist, der nach der Gleichung

$$\tan\theta = (1-\sin\eta_G)/[(n^2-1)^{1/2}-\cos\eta_G]$$

mit

    n = dem Brechungsindex des Scheibenmaterials, welcher etwa gleich 1,5 ist, und

    $\eta_G$ = einem Grenzwinkel

bestimmt ist,

    wobei bei einem bestimmten Sonnenstand die unter einem Winkel ($\eta$) einfallenden Sonnenstrahlen bei einem Winkel $\eta > \eta_G$ nicht durchgelassen und bei einem Winkel $\eta < \eta_G$ durchgelassen werden,

    wobei die untere Dreieckseite gegenüber der Vertikalen unter einem Winkel ($\Omega$) angeordnet ist, der gleich dem oder größer als der Komplementwinkel des Grenzwinkels ($\eta_G$) ist

    und wobei die Unterseiten der Prismenstäbe so ausgebildet sind, daß eine Reflexion von über die obere Dreieckseite in die Prismenstäbe mit einem

Winkel $\eta > \eta_G$ eintretenden Sonnenstrahlen auf die Rückseite im wesentlichen ausgeschlossen ist.

Die erfindungsgemäße Fensterscheibe kann grundsätzlich ohne Schutzscheiben angeordnet werden. Sie kann aber auch zusammen mit einer außenseitig vorgesetzten ebenen Scheibe oder nach Art einer Isolierglasscheibe zwischen benachbarten ebenen Scheiben angeordnet werden.

Der Brechungsindex für Glas und auch für Acrylglas beträgt etwa n =1,5. Für den Brechungsindex von Luft kann ausreichend genau n =1 gesetzt werden.

Auf die Oberseite der Prismenstäbe mit einem Winkel $\eta > \eta_G$ auftreffende Sonnenstrahlen werden gebrochen und innerhalb des Prismenstabes so reflektiert, daß sie über die Unterseite des Prismenstabes wieder austreten, jedenfalls nicht in den Raum eintreten. Dieses gilt sowohl für direktes als auch für diffuses Sonnenlicht. Allerdings fällt ein wesentlicher Teil des diffusen Sonnenlichtes stets mit einem Winkel $\eta < \eta_G$ ein, so daß die Fensterscheibe für diffuses Sonnenlicht im wesentlichen durchlässig ist.

Der Grenzwinkel $\eta_G$, von dem die Neigung der Oberseite und der Unterseite der Prismenstäbe gegen die Vertikale abhängt, bestimmt sozusagen den Schaltzeitpunkt, zu dem die Fensterscheibe direkte Sonnenstrahlen abschirmt oder durchläßt. Durch geeignete Wahl des Winkels $\eta_G$ kann folglich dieser Schaltzeitpunkt so gewählt werden, daß in gewünschten sommerlichen, zum Sommeranfang symmetrischen Zeitabschnitten die direkten Sonnenstrahlen abgeschirmt werden, während sie in der übrigen Zeit des Jahres durchgelassen werden. Dabei spielt auch die geographische Breite 8 eine Rolle. Allgemein gilt, daß der Grenzwinkel $\eta_G$ zur Bestimmung des Winkels $\theta$ nach obiger Gleichung bei nach Süden gerichteter Fensterscheibe der Summe aus dem Komplementwinkel zur geographischen Breite $\delta$ und dem Inklinationswinkel i zwischen der Richtung zur Sonne und der Ekliptik an den beiden Jahreszeitpunkten, an denen die Fensterscheibe die Eigenschaft "durchlässig" nach undurchlässig" bzw. "undurchlässig" nach "durchlässig" für direkte Sonnenstrahlung verändern soll, entspricht. $\eta_G$ kann also nicht größer als die Summe aus dem Komplementwinkel zur geographischen Breite $\delta$ und dem jährlichen Maximum des Inklinationswinkels i und nicht kleiner als die Summe aus dem Komplementwinkel zu geographischen Breite $\delta$ und dem jährlichen Minimum des Inklinationswinkels i sein. Soll der Schaltzeitpunkt im Frühlingsanfang bzw. Herbstanfang liegen, dann entspricht der Grenzwinkel $\eta_G$ zur Bestimmung des Winkels $\theta$ nach obiger Gleichung bei nach Süden gerichteter Fensterscheibe dem Komplementwinkel zur geographischen Breite $\delta$.

Die oben erläuterten Zusammenhänge gelten strenggenommen nur bei nach Süden ausgerichteten Fenstern, wobei Abweichungen gegenüber der Südrichtung in der Größenordnung von $\pm 10°$ die Eigenschaften der Fensterscheibe nur unwesentlich beeinflussen. Aber auch bei nicht nach Süden ausgerichtetem Fenster können die Eigenschaften der erfindungsgemäßen Fensterscheibe voll genutzt werden, wenn die Prismenstäbe gegenüber der Horizontalen um einen Winkel $\alpha$ geneigt angeordnet sind, der nach der Gleichung

$$\tan\alpha = -\sin\beta/\tan\delta$$

mit

$\beta$ = dem Winkel zwischen der nach außen gerichteten Fenstemormalen und der Südrichtung und

$\delta$ = der geographischen Breite

bestimmt ist.

Wenn ein Prismenstab an einem Ort mit einer von der geplanten geographischen Breite abweichenden geographischen Breite angewendet wird, so verschiebt sich der aktuelle Ausschaltzeitpunkt der Strahlungsdurchlässigkeit um etwa +2,5 Tage und der aktuelle Anschaltzeitpunkt um etwa -2,5 Tage je Grad Abweichung der aktuellen von der geplanten geographischen Breite gegenüber den geplanten Schaltzeitpunkten. Die Schaltzeitpunkte passen sich also im richtigen Sinne dem kälteren oder wärmeren Klima des Ortes mit der aktuellen geographischen Breite an.

Für die Gestaltung der Unterseiten der Prismenstäbe derart, daß eine Reflexion von über die obere Dreieckseite in die Prismenstäbe eintretenden Sonnenstrahlen mit Winkeln größer oder gleich dem Grenzwinkel $\eta_G$ auf die Rückseite ausgeschlossen ist, gibt es verschiedene Möglichkeiten. Bei einer Ausführung weist die untere Dreieckseite ein Sägezahnprofil auf, wobei jeder Sägezahn jeweils eine obere Profilseite d und eine untere Profilseite e hat und die Profilseiten d unter einem Winkel $\varepsilon$ zur unteren Dreieckseite derart ausgerichtet sind, daß die Richtung des flachsten, also mit dem Winkel $\eta$ gleich dem Grenzwinkel $\eta_G$, an der oberen Dreieckseite gebrochenen und auf die Profilseite e auftreffenden Sonnenstrahls gleich der Richtung des steilsten, an der oberen Dreieckseite gebrochenen und an der Profilseite d reflektierten Sonnenstrahls ist, und wobei die Profilseiten e unter einem Winkel $\kappa$ zur unteren Dreieckseite derart ausgerichtet sind, daß die flachsten, an der oberen Dreieckseite gebrochenen und auf die Profilseite e auftreffenden Sonnenstrahlen im wesentlichen parallel zur Profilseite d gebrochen werden. Vorzugsweise sollte das Sägezahnprofil an der Basis des Dreieckquerschnittes des Prismas mit einer Sägezahnspitze beginnen und im Scheitelpunkt der Dreieckseiten a und b mit einer Sägezahnkerbe enden.

Bei einer anderen Ausführung ist die Unterseite der Prismenstäbe aufgerauht, so daß die Mehrzahl der an der oberen Dreieckseite gebrochenen und auf die Unterseite der Prismenstäbe auftreffenden Sonnenstrahlen über die Unterseite austreten.

In konstruktiver Hinsicht können die Prismenstäbe an die Fensterscheibe angeformt sein. Es besteht auch die Möglichkeit, die Fensterscheibe selbst aus Prismenstäben zusammenzusetzen.

Die mit der Erfindung erreichten Vorteile lassen sich wie folgt zusammenfassen:

Die Fensterscheibe verhindert die Durchsichtigkeit in direkter Richtung sowohl von außen nach innen als auch von innen nach außen. Sie ermöglicht daher nicht nur die Einsparung von äußeren Sonnenschutzvorrichtungen, sondern auch den Verzicht auf innen angeordnete Einrichtungen gegen die Einsicht von außen. Die Fensterscheibe ist mit üblichen ebenen Glasscheiben, auch mit Isolierglasscheiben, in beliebiger Form kombinierbar, wenn ein Teil der gesamten Fensterfläche durchsichtig sein muß.

Die Fensterscheibe reflektiert im Sommer die direkte Sonnenstrahlung praktisch vollständig und verhindert somit sowohl die aufheizende und blendende Wirkung dieser Strahlung als auch die übermäßige Helligkeit in den Räumen. Im Winter wird die direkte Sonnenstrahlung von der Fensterscheibe weitgehend durchgelassen, so daß sie zur Verringerung der von der Raumheizung aufzubringenden Energie und als von den Prismenstäben diffus gestreutes Licht zur gleichmäßigen, blendfreien Ausleuchtung des Raumes beiträgt. Von der indirekten, diffusen Sonnenstrahlung läßt die Fensterscheibe im Sommer und im Winter etwa 70% derjenigen

Strahlungsenergie in den Raum eindringen, die durch eine übliche Isolierglasscheibe in den Raum eindringen kann.

Die üblichen Maßnahmen zur Erhöhung des Wärmedurchgangswiderstandes von Isolierglasscheiben, wie zum Beispiel die Füllung des Scheibenzwischenraumes mit einem die Wärmekonvektion und die Wärmeleitung reduzierenden Gas oder das Aufdampfen dünner Schichten, können zusätzlich angewendet werden, ohne die spezifischen Eigenschaften der Fensterscheibe zu beeinträchtigen.

Im folgenden werden in der Zeichnung dargestellte Ausführungsbeispiele der Erfindung erläutert; es zeigen:

Figur 1 schematisch und teilweise einen Vertikalschnitt durch eine Fensterscheibe mit vorgesetzter Glasscheibe,

Figur 2 teilweise den Gegenstand nach Figur 1,

Figur 3 einen vergrößerten Teil des Gegenstandes nach Figur 2,

Figur 4 schematisch die Anordnung der Prismenstäbe für Fensterscheiben, die unter verschiedenen Winkeln zur Südrichtung ausgerichtet sind,

Figur 5 Wärmeverluste und Wärmegewinne verschiedener Fensterscheiben in Abhängigkeit von der Jahreszeit.

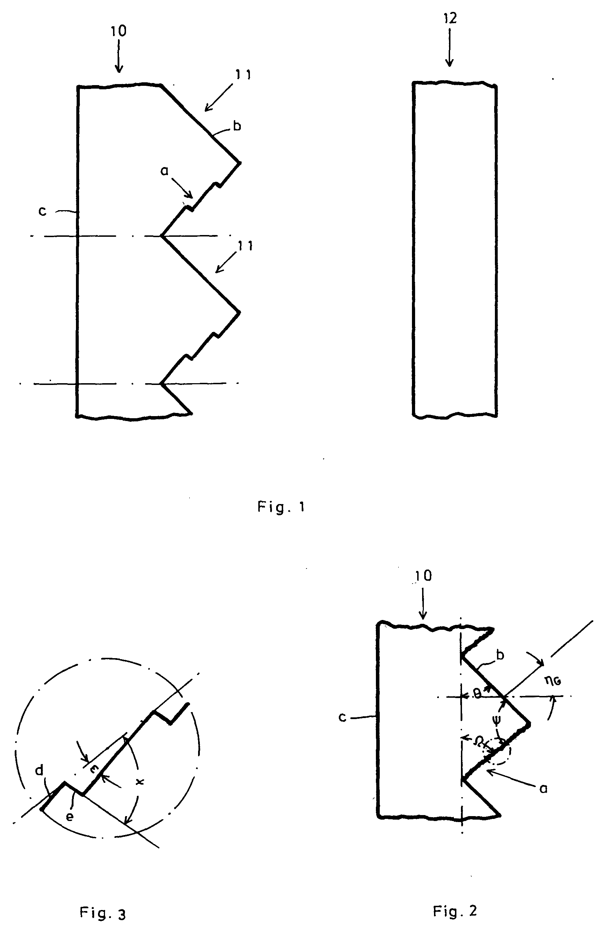

Die in Figur 1 im Vertikalschnitt wiedergegebene Fensterscheibe 10 weist raumseitig eine vertikale Rückseite c und außenseitig eine Vielzahl von übereinander angeordneten Prismenstäben 11 mit dreieckförmigem Querschnitt auf. Jeder Prismenstab 11 weist im Querschnitt eine obere Dreieckseite b auf, die der Oberseite des Prismenstabes 11 entspricht, und eine untere Dreieckseite a, die der Unterseite des Prismenstabes 11 entspricht. Bei der dargestellten Ausführung ist außenseitig vor die Fensterscheibe 10 eine ebene Scheibe 12 gesetzt, die ebenso wie die Fensterscheibe 10 aus Glas oder Acrylglas bestehen kann.

Die dargestellte Fensterscheibe 10 ist nach Süden ausgerichtet und ausgelegt für eine mittlere europäische geographische Breite von $\delta=50°$. Die Prismenstäbe 11 erstrecken sich horizontal. Die Oberseiten der Prismenstäbe bzw. die Dreieckseiten b sind gegenüber der Vertikalen unter einem Winkel $\theta$ derart angeordnet, daß Sonnenstrahlen bei einem Winkel $\eta>\eta_G$ nicht durchgelassen und bei einem Winkel $\eta<\eta_G$ durchgelassen werden. Der in Figur 2 eingezeichnete Grenzwinkel $\eta_G$ richtet sich danach, in welchem sommerlichen Zeitabschnitt die einfallenden Sonnenstrahlen reflektiert werden sollen, während sie in den übrigen Zeitabschnitten des Jahres durchgelassen werden sollen. Bei der dargestellten Ausführung soll der Schaltzeitpunkt jeweils am Frühlingsanfang und am Herbstanfang liegen. Dementsprechend beträgt der Grenzwinkel $\eta_G=40°$ und der Winkel $\theta$ etwa 45°.

Die Unterseiten der Prismenstäbe 11 bzw. die Dreieckseite a sind gegenüber der Vertikalen unter einem Winkel $\Omega$ angeordnet, der gleich dem oder größer als der Komplementwinkel des Grenzwinkels $\eta_G$ ist. Bei der dargestellten Ausführung beträgt der Winkel $\Omega$ etwa 50°, so daß der Winkel $\Psi$ zwischen den beiden Dreieckseiten a und b etwa 85° beträgt.

Die Unterseiten der Prismenstäbe 11 bzw. die Dreieckseiten a weisen bei der dargestellten Ausführung ein Sägezahnprofil auf, wobei jeder Sägezahn jeweils eine obere Profilseite d und eine untere Profilseite e hat. Die Profilseiten d sind unter einem Winkel $\varepsilon$ zur unteren Dreieckseite a derart ausgerichtet, daß die Richtung des flachsten, also mit dem Winkel $\eta$ gleich dem Grenzwinkel $\eta_G$, an der oberen Dreieckseite b gebrochenen und auf die Profilseite e auftreffenden Sonnenstrahls gleich der Richtung des steilsten, an der oberen Dreieckseite b gebrochenen und an der Profilseite d reflektierten Sonnenstrahls ist, und die Profilseiten e sind unter einem Winkel derart ausgerichtet, daß die flachsten, an der oberen Dreieckseite b gebrochenen und auf die Profilseite e auftreffenden Sonnenstrahlen im wesentlichen parallel zur Profilseite d gebrochen werden. Damit ist ausgeschlossen, daß die auf die obere Dreieckseite b der Prismenstäbe auftreffenden und daran gebrochenen direkten Sonnenstrahlen zur Rückseite c hin reflektiert werden. Sie treten vielmehr an der Unterseite der Prismenstäbe aus.

Wie man insbesondere aus Figur 1 entnimmt, beginnt das Sägezahnproﬁl an der Basis des Dreieckquerschnittes des Prismas mit einer Sägezahnspitze und endet im Scheitelpunkt der Dreieckseiten a und b mit einer Sägezahnkerbe.

Bei einer nicht dargestellten Ausführung kann die Unterseite der Prismenstäbe 11 bzw. die Dreieckseite a auch aufgerauht sein, um eine Reflexion der mit Winkeln $\eta > \eta_G$ in den Prismenstab eingedrungenen und innen auf die Dreieckseite a auftreffenden Sonnenstrahlen in Richtung auf die Rückseite c im wesentlichen zu unterbinden.

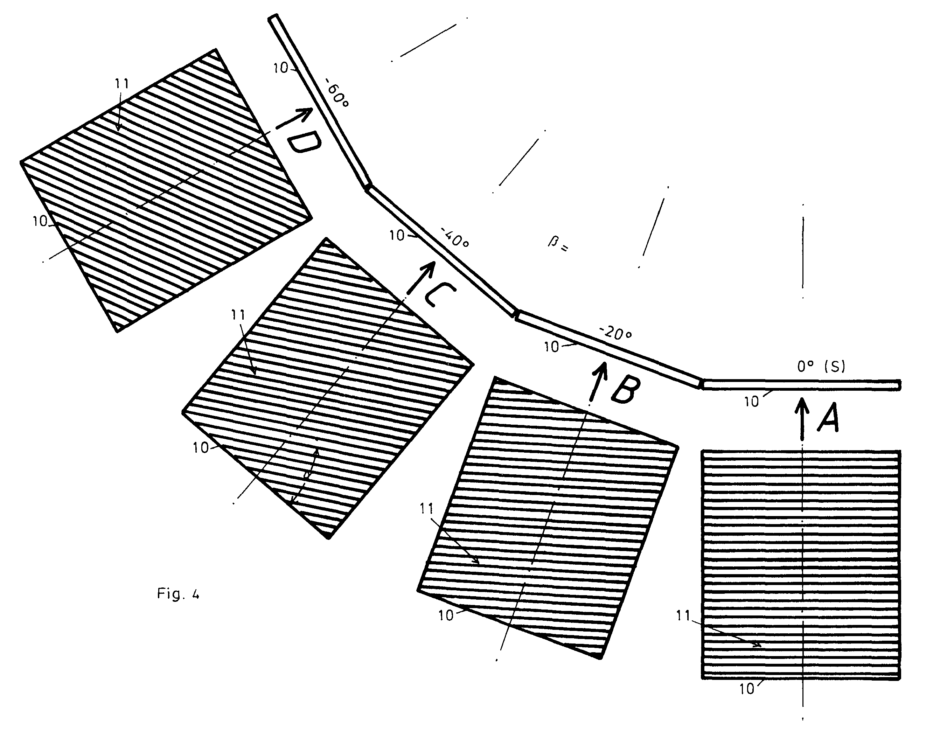

Wird die Fensterscheibe nicht exakt nach Süden ausgerichtet, können die oben erläuterten Eigenschaften der Fensterscheibe auch dann erreicht werden, wenn die Prismenstäbe 11 unter einem Winkel $\alpha$ zur Horizontalen angeordnet werden. Das erläutert Figur 4. Der Winkel $\alpha$ hängt ab von dem Winkel $\beta$, der die Abweichung der Ausrichtung der Fensterscheibe gegenüber der Südrichtung angibt, und von der geographischen Breite $\delta$, nach Maßgabe der eingangs angegebenen Formel.

Da die Eigenschaften der Fensterscheibe bei Winkelabweichungen von $\pm10°$ gegenüber der Südrichtung im wesentlichen erhalten bleiben, genügen für praktische Ausführungen sieben Fensterscheiben mit unterschiedlich gegen die Horizontale geneigten Prismenstäben.

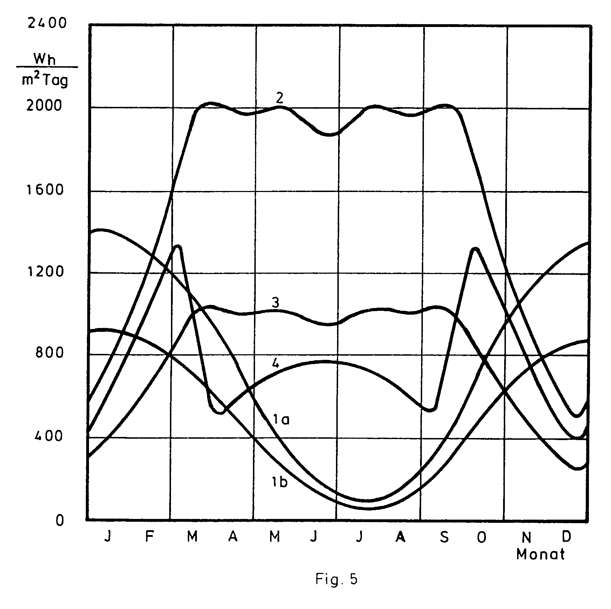

In Figur 5 sind Wärmeverluste und Wärmegewinne verschiedener Fensterscheiben in Abhängigkeit von der Jahreszeit wiedergegeben. Die Kurven 1a und 1b geben den durchschnittlichen täglichen Wärmeverlust einer üblichen Doppelglasscheibe in Berlin mit einem Wärmedurchgangskoeffizienten von 3 W/m$^2$K bzw. 2 W/m$^2$K wieder. Die Kurven 2,3 und 4 geben die Summe der durchschnittlich täglich in eine nach Süden ausgerichtete Fensterscheibe eingestrahlten Energiedichten der direkten und der indirekten Sonnenstrahlung bei einem Brechungsindex n=1,5 und der geographischen Breite $\delta$=50° in einer Großstadt wieder, und zwar die Kurve 2 für eine übliche Doppelglasscheibe, die Kurve 3 für eine übliche Sonnenschutzscheibe und die Kurve 4 für die erfindungsgemäße Fensterscheibe.

**Patentansprüche**

1. Eine Fensterscheibe für vertikale Fenster und Fassaden, die einen Innenraum von der äußeren Umgebung abtrennt und raumseitig eine ebene vertikale Rückseite (c) und außenseitig eine Vielzahl von übereinander angeordneten Prismenstäben (11) mit dreieckförmigem Querschnitt aufweist und die vertikal in einem Gebäude an einem Ort mit vorgegebener geographischen Breite $\delta$ und mit einer Ausrichtung, welche von der Südrichtung um den Winkel $\beta$ abweicht, eingebaut ist, wobei im Querschnitt der Prismenstäbe (11) gesehen die obere Dreieckseite (b) gegenüber der Vertikalen unter einem Winkel ($\theta$) angeordnet ist, der nach der Gleichung

$$\tan\theta = (1-\sin\eta_G)/[(n^2-1)^{1/2}-\cos\eta_G]$$

mit

     n = dem Brechungsindex des Scheibenmaterials, welcher etwa gleich 1,5 ist, und

     $\eta_G$ = einem Grenzwinkel, nicht größer als die Summe aus dem Komplementwinkel zur geographischen Breite $\delta$ und dem jährlichen Maximum des Inklinationswinkels i und nicht kleiner als die Summe aus dem Komplementwinkel zur geographischen Breite $\delta$ und dem jährlichen Minimum des Inklinationswinkels i,

bestimmt ist,

     wobei bei einem bestimmten Sonnenstand die unter einem Winkel ($\eta$) einfallenden Sonnenstrahlen bei einem Winkel $\eta > \eta_G$ nicht durchgelassen und bei einem Winkel $\eta < \eta_G$ durchgelassen werden,

     **dadurch gekennzeichnet**, daß bei nicht nach Süden ausgerichtetem Fenster die Prismenstäbe (11) gegenüber der Horizontalen um einen Winkel ($\alpha$) geneigt angeordnet sind, der nach der Gleichung

$$\tan\alpha = -\sin\beta/\tan\delta$$

     mit

     $\beta$ = dem Winkel zwischen der nach außen gerichteten Fensternormalen und der Südrichtung bestimmt ist.

2. Fensterscheibe nach Anspruch 1, **dadurch gekennzeichnet,** daß die untere Dreieckseite der Prismenstäbe gegenüber der Vertikalen unter einem Winkel ($\Omega$) angeordnet ist, der gleich dem oder größer als der Komplementwinkel des Grenzwinkels ($\eta_G$) ist und daß die Unterseiten der Prismenstäbe so ausgebildet sind, daß eine Reflexion von über die obere Dreieckseite in die Prismenstäbe mit einem Winkel $\eta > \eta_G$ eintretenden Sonnenstrahlen auf die Rückseite im wesentlichen ausgeschlossen ist.

**3.** Fensterscheibe nach Anspruch 1 oder 2, **dadurch gekennzeichnet,** daß die untere Dreieckseite (a) ein Sägezahnprofil aufweist, wobei jeder Sägezahn jeweils eine obere Profilseite (d) und eine untere Profilseite (e) hat und die Profilseiten (d) unter einem Winkel (ε) zur unteren Dreieckseite (a) derart ausgerichtet sind, daß die Richtung des flachsten in den Raum eindringenden, an der oberen Dreieckseite (b) gebrochenen und auf die Profilseite (e) auftreffenden Sonnenstrahls gleich der Richtung des steilsten, an der oberen Dreieckseite (b) gebrochenen und an der Profilseite (d) reflektierten Sonnenstrahls ist, wobei die Profilseiten (e) unter einem Winkel (κ) zur unteren Dreieckseite (a) derart ausgerichtet sind, daß die flachsten, an der oberen Dreieckseite (b) gebrochenen und auf die Profilseite (e) auftreffenden Sonnenstrahlen im wesentlichen parallel zur Profilseite (d) gebrochen werden.

**Claims**

**1.** A pane for vertical windows and facades which separates an inner room from an outer environment and has a plane, vertical rear face (c) pointing to the room interior and a plurality of prismatic ribs (11) with triangular cross-section positioned one above the other pointing to the environmental exterior and which is vertically mounted to a building at a site with a specified latitude δ and a direction deviating by an angle β from the south,

where the upper face (b) of the triangular cross-section of the prismatic ribs (11) is inclined by an angle (θ) relative to the vertical which is determined by the equation

$$\tan\theta = (1-\sin\eta_G)/[(n^2-1)^{1/2}-\cos\eta_G]$$

with

n = the refractive index of the pane material, which is about 1.5, and

$\eta_G$ = a limiting angle, not greater than the sum of the complement of the latitude δ and the annual maximum of the solar declination i and not less than the sum of the complement of the latitude δ and the annual minimum of the solar declination i,

where for an actual solar position the solar rays impinging on the pane with an angle (η) are not transmitted for an angle $\eta>\eta_G$ and are transmitted for an angle $\eta<\eta_G$,

**wherein** for windows not oriented to the south the prismatic ribs (11) are inclined by an angle (α) relative to the horizontal which is determined by the equation

$$\tan\alpha = -\sin\beta/\tan\delta$$

with

β = the angle between the window normal directed to the exterior and the south direction.

**2.** The pane in accordance to claim 1, **wherein** the lower faces of the prismatic ribs are inclined to the vertical by an angle (Ω) which is equal to or greater than the complement of the limiting angle ($\eta_G$) and the lower faces of the prismatic ribs are shaped such that the reflection of solar rays entering the prismatic ribs at the upper faces with an angle $\eta>\eta_G$ towards the rear side is essentially excluded.

**3.** The pane in accordance to claim 1 or 2, **wherein** the lower face (a) of a rib is shaped like a saw-tooth profile, where each saw-tooth has an upper profile face (d) and a lower profile face (e), where the profile face (d) is inclined by an angle (ε) relative to the lower face (a) of the rib in such a way that the direction of the flattest solar ray entering the room, being refracted at the upper face (b) of the rib and impinging on the profile face (e) is equal to the direction of the steepest solar ray being refracted at the upper face (b) of the rib and being reflected at the profile face (d) and where the profile face (e) is inclined by an angle (κ) relative to the lower face (a) of the rib in such a way that the flattest solar ray being refracted at the upper face (b) of the rib and impinging on the profile face (e) is essentially refracted in parallel relative to the profile face (d).

**Revendications**

**1.** Une vitre pour fenêtres et façades verticales, qui sépare un intérieur de ses environs extérieurs et qui montre du côté intérieur un côté derrière vertical (c) et du côté extérieur une multiplicité des bâtons de prismes (11), qui sont arranges l'un sur l'autre avec une coupe transversale d'une forme triangulaire, et qui - la vitre - est intégrée verticalement dans un bâtiment d'une largeur géographique prédéterminée δ et avec un ajustage, qui s'écarte de la direction du sud pour l'angle β,

en même temps le côté haut du triangle (b), ou dans la coupe transversale des bâtons de prismes (11), est arrangé en face de la verticale avec un angle (θ), qui est déterminé d'après l'équation

$$\tan\theta = (1-\sin\eta_G)/[(n^2-1)^{1/2}-\cos\eta_G]$$

avec

n = l'indice de réfraction du matériel des vitres, qui est a peu près 1,5, et

$\eta_G$ = un angle limité, qui n'est pas supérieur a la somme de l'angle complémentaire de la largeur géographique $\delta$ et le maximum annuel de l'angle d'inclinaison i et pas inférieur a la somme de l'angle complémentaire de la largeur géographique $\delta$ et le minimum annuel de l'angle d'inclinaison i,

bien que, selon une certaine position du soleil, les rayons solaires, qui tombent avec un angle ($\eta$), ne pénètrent pas s'il y a l'angle $\eta > \eta_G$ et pénètrent s'il y a l'angle $\eta < \eta_G$,

**leurs caractéristiques sont que**, si la fenêtre n'est pas dirigée vers le sud, les bâtons de prismes (11) sont ordonnés vis a vis de l'horizontale avec un angle ($\alpha$), qui est déterminé d'après l'équation

$$\tan\alpha = -\sin\beta/\tan\delta$$

avec

$\beta$ = l'angle entre la normale de la fenêtre, qui est dirigée vers l'extérieur, et la direction du sud.

2. Une vitre conforme a 1, **est caractérisée par le fait** que le côté triangulaire inférieur des bâtons de prismes, qui est arrange en face de la verticale avec un angle ($\Omega$), qui est égal ou plus grand que l'angle complémentaire de l'angle limite ($\eta_G$) et que les côtés inférieurs des bâtons de prismes sont déterminés de sorte qu'une réflexion des rayons solaires sur le côté triangulaire supérieur des bâtons de prismes avec un angle de $\eta > \eta_G$ au verso est pratiquement exclu.

3. Une vitre conforme a 1 ou 2, **est caractérisée par le fait** que le côté triangulaire inférieur (a) montre un profil en dents de scie, ou chaque dent de scie a un profil supérieur (d) et un profil inférieur (e) et les côtés du profil (d) sont dirigés vers un angle ($\varepsilon$) au côté triangulaire inférieur (a) de sorte que la direction des rayons solaires les plus bas qui pénètrent a l'intérieur, sont réfractés vers le haut du triangle (b) et tombant sur le côté du profil (e), équivaut a la direction des rayons solaires le plus vertical, qui est réfracté sur le côté triangulaire haut (b) et est réfléchi sur le côté du profil (d), en même temps les côtés du profil (e) sont dirigés vers un angle ($\kappa$) au côté triangulaire inférieur (a) de telle manière que le rayons solaires les plus bas, qui sont réfractés sur le côté triangulaire supérieur (b) se rencontrent sur le côté du profil (e) et sont réfractés presque parallèlement au côté du profil (d).

Fig. 1

Fig. 3

Fig. 2

8

Fig. 4

Fig. 5